# EUROPÄISCHE PATENTANMELDUNG

(11) **EP 1 496 174 A2**
(43) Veröffentlichungstag der Anmeldung: **12.01.2005**
(21) Anmeldenummer: 04015699.4
(22) Anmeldetag: 03.07.2004
(51) Int. Cl.: E05B 17/22, E05B 1/00, E05B 65/12

(54) **Berührungslose Sensorik zum Öffnen eines Kraftfahrzeuges sowie Verfahren zum Entriegeln einer Kraftfahrzeugtür**

(30) Priorität: 05.07.2003 DE 10330503
(71) Anmelder: Hella KGaA Hueck & Co., 59552 Lippstadt (DE)
(72) Erfinder: Kirchhoff, Friedhelm, 59597 Erwitte (DE)

(57) **Zusammenfassung**

Die Erfindung betrifft eine berührungslose Sensorik 1 zum Öffnen eines Kraftfahrzeugs mit einem Sensor in einem Türgriff 2, welcher Sendeelemente 11, 12 und ein Empfangselement 13 aufweist, wobei die Sensorik an der Innenfläche 21 einer Handhabe 20 des Türgriffs 2 angeordnet ist. Erfindungsgemäß ist vorgesehen, dass es sich um einen optischen Sensor handelt, die Sendeelemente 11, 12, eine Nutzlichtquelle 11 und eine Referenzlichtquelle 12 aufweisen, das Empfangselement 13 ein lichtempfindlicher Detektor 13 ist, das Empfangselement 13 so zur Referenzlichtquelle 12 angeordnet ist, dass es von dem Referenzlichtsignal 12a der Referenzlichtquelle 12 direkt getroffen wird, und das Empfangselement 13 so zur Nutzlichtquelle 11 angeordnet ist, dass es von dem Reflexionslichtsignal 11a der Nutzlichtquelle 11 nur indirekt getroffen wird. Darüber hinaus betrifft die Erfindung ein Ent- und Verriegelungssystem für ein Kraftfahrzeug mit einer erfindungsgemäßen Sensorik 1, wobei die Sensorik 1 mit einer Auswerteeinheit 14 verbunden ist, die eine Annäherung einer Hand 4 an die Sensorik 1 erfasst und die Auswerteeinheit 14 mit einer Sender-/Empfängereinheit verbunden ist. Des Weiteren betrifft die Erfindung ein Verfahren zum Entriegeln einer Kraftfahrzeugtür, wobei die Annäherung einer Hand an einen Türgriff durch eine erfindungsgemäße Sensorik detektiert wird, ein Aktivierungssignal vom Kraftfahrzeug an einen ID-Geber beim Fahrer gesandt wird, der ID-Geber ein Authentifikationssignal an die Sender-/Empfängereinheit sendet und bei positiver Identifizierung die Kraftfahrzeugtür entriegelt wird.

## Beschreibung

Die Erfindung betrifft eine berührungslose optische Sensorik zum Öffnen eines Kraftfahrzeugs mit einem Sensor in einem Türgriff, welcher Sendeelemente und ein Empfangselement aufweist. Darüber hinaus betrifft die Erfindung ein Ent- und Verriegelungssystem für ein Kraftfahrzeug mit einer solchen Sensorik sowie ein Verfahren zum Entriegeln einer Kraftfahrzeugtür.

Es sind funkfernbedienbare Zentralverriegelungssysteme bekannt, bei denen zur Ver- bzw. Entriegelung die aktive Betätigung einer Drucktaste auf einem Funkschlüssel notwendig ist. Dabei werden im Rahmen einer unidirektionalen Kommunikation vom Funkschlüssel per Funk Authentifikationssignale an das Fahrzeug gesendet.

Aus der DE 196 17 038 C2 ist es bekannt, in die Handhabe eines Türgriffes eines Kraftfahrzeugs einen Sensor einzubauen. Bei dem Sensor handelt es sich um einen kapazitiven Sensor, der so angeordnet ist, dass er das Eindringen einer Hand zwischen die Handhabe und die Tür in der Griffmulde detektiert. Hierzu ist der kapazitive Sensor an der Innenseite der Handhabe angeordnet und auf das Türblech ausgerichtet. Nachdem das Einbringen einer Hand in die Griffmulde detektiert wird, aktiviert der kapazitive Sensor eine Steuereinheit, die ein Signal aussendet. Dieses Signal wird von einem Funkschlüssel im Besitz des Fahrers beantwortet, indem der Funkschlüssel Authentifizierungssignale zurück an das Kraftfahrzeug sendet. Im Erfolgsfall wird die Kraftfahrzeugtür entriegelt und der Fahrer kann dann, ohne den Schlüssel in ein Schloss stecken zu müssen, die Kraftfahrzeugtüre öffnen. Nachteilig an der bekannten Vorrichtung ist jedoch, dass der kapazitive Näherungssensor den Entriegelungswunsch des Fahrers bei der Annäherung sehr spät zuverlässig erkennt, nämlich dann, wenn die Hand bereits weit in die Griffmulde unterhalb des Türgriffes eingreift. Daraus ergibt sich das Problem, dass durch die anschließende Authentifizierung noch eine gewisse Zeit vergeht und der Fahrer entweder in die Hand innerhalb der Griffmulde für einige Momente untätig halten muss oder ein zweites Mal die Handhabe der Tür betätigen muss, da die Entriegelung erst mit einer gewissen zeitlichen Verzögerung eintritt.

Aufgabe der Erfindung ist es, eine Sensorik und ein Verfahren zum Entriegeln einer Kraftfahrzeugtür zur Verfügung zu stellen, durch die eine schnellere Entriegelung der Kraftfahrzeugtür beim Annähern der Hand des Fahrers an den Türgriff erfolgt.

Die Aufgabe wird durch eine berührungslose Sensorik mit den Merkmalen des Patentanspruches 1, ein Ent- und Verriegelungssystem mit den Merkmalen des Patentanspruches 6 sowie ein Verfahren zum Entriegeln einer Kraftfahrzeugtür mit den Merkmalen des Patentanspruchs 7 gelöst.

Durch die erfindungsgemäße Sensorik ist es möglich, dass die Annäherung einer Hand schon detektiert wird, bevor sie in die Griffmulde zwischen Türgriff und Tür eintaucht. Damit kann die Authentifizierung zwischen einem ID-Geber im Schlüssel des Fahrers und dem Kraftfahrzeug schon während der Zeit erfolgen, bevor der Fahrer mit seiner Hand die Handhabe des Türgriffes umfasst. Damit ist es dem Fahrer möglich, ohne Verzögerung sofort die Handhabe des Türgriffs zu ziehen, da bei einer positiven Authentifizierung in der verbleibenden Zeit eine Entriegelung der Kraftfahrzeugtür erfolgt. Durch den erfindungsgemäßen Sensor ist es möglich, dass die Annäherung der Hand in die Griffmulde unabhängig von den äußeren Einflüssen, beispielsweise der Lichteinstrahlung detektiert wird. Dies wird durch den Abgleich des Differenzsignals zwischen der Referenzlichtquelle und der Nutzlichtquelle im Empfangselement erreicht. Darüber hinaus sind weitere veränderliche Einflüsse, wie beispielsweise Temperaturunterschiede und Alterung ebenfalls ausgeschlossen.

Durch das erfindungsgemäße Ent- und Verriegelungssystem sind dieselben Vorteile zu erzielen. Dabei ist es nicht nötig, den Fahrzeugschlüssel aus der Tasche herauszunehmen, da mit einem solchen System kein aktives Betätigen eines Druckknopfes am Fahrzeugschlüssel, wie dies bisher der Fall war, erfolgen muss. Durch das erfindungsgemäße Verfahren zum Entriegeln einer Kraftfahrzeugtür werden die vorgenannten Vorteile ebenfalls erreicht.

Eine vorteilhafte Weiterbildung der Erfindung sieht vor, dass die Nutzlichtquelle und die Referenzlichtquelle jeweils als eine LED, insbesondere eine Infrarot-LED, und das Empfangselement als eine Photodiode ausgebildet ist. Dies stellt eine sehr zuverlässige und preiswert herzustellende Möglichkeit für den erfindungsgemäßen Sensor dar. Durch Bauelemente, die im Infrarotbereich arbeiten, wird eine sehr störungsfreie Verwendung des Sensors möglich.

Eine weitere vorteilhafte Weiterbildung der Erfindung sieht vor, dass an der Außenfläche der Handhabe des Türgriffs eine Zusatz-Sensorik angeordnet ist, die unabhängig von der Sensorik ist. Dadurch ist es möglich, dass neben der berührungslosen Entriegelung durch die Zusatz-Sensorik eine berührungslose Verriegelung der Kraftfahrzeugtür erfolgen kann.

Eine weitere vorteilhafte Weiterbildung der Erfindung sieht vor, dass die Sensorik und/oder die Zusatz-Sensorik unter einem IR-durchlässigen Medium angeordnet sind. Dadurch kann die Sensorik sehr gut geschützt werden, da sie nicht direkten Umwelteinflüssen ausgesetzt ist. Außerdem wird dadurch nicht ein spezielles Design für die Sensorik vorgegeben, sondern sie ist prinzipiell in fast jede Oberfläche integrierbar.

Eine weitere vorteilhafte Weiterbildung der Erfindung sieht vor, dass im Türgriff eine Sende-/Empfängereinheit angeordnet ist. Dadurch wird eine sehr gute Entriegelungssicherheit gewährleistet, da der Fahrer, der seine Hand in die Griffmulde einführt, gleichzeitig vor dem Türgriff steht und sich somit der Fahrzeugschlüssel mit ID-Geber in unmittelbarer Nähe des Türgriffes befindet. Somit müssen für die Authentifizierung nur geringe Sendeleistungen aufgebracht werden.

Die Integration der Sende-/Empfängereinheit im Türgriff bei gleichzeitigem Vornehmen der berührungslosen Sensorik ist problemlos möglich, da durch die vorgestellte Sensorik, die man auch als IR-Lichtschranke bezeichnen kann, keine gegenseitige Störung mit der Sende-/Empfängereinheit stattfindet, wie dies bei der Verwendung eines kapazitiven Sensors der Fall wäre.

Besonders vorteilhaft ist bei einem erfindungsgemäßen Verfahren, wenn das Aktivierungssignal niederfrequent ist, insbesodnere bei ca. 125 kHz liegt, und über eine Ferritantenne als Sender-/Empfangseinheit ausgesendet wird. Damit ist eine sichere Aktivierung bei nur geringem Energieverbrauch gewährleistet. Vorteilhafter Weise ist vorgesehen, dass die Authifizierungskommunikation zwischen ID-Geber und Sender-/Empfängereinheit im hochfrequenten Bereich erfolgt, insbesondere bei ca. 433 MHz. Durch hochfrequente Kommunikation ist zum Einen ein sehr schneller Datenaustausch gewährleistet und zum Anderen wird ein hohes Sicherheitslevel erreicht.

Vorteilhafte Ausgestaltungen der Erfindung werden weiter anhand der in den Figuren dargestellten Ausführungsbeispiele erläutert. Hierbei zeigen:
- Fig. 1: schematischer Aufbau einer erfindungsgemäßen Sensorik mit Auswerteeinheit und Auswertesignal ohne reflektierenden Körper;
- Fig. 2: eine Vorrichtung wie in Fig. 1 dargestellt, jedoch mit reflektierendem Körper;
- Fig. 3: perspektivische Ansicht einer Handhabe eines Türgriffes mit eingebauter Sensorik sowie Zusatz-Sensorik;
- Fig. 4: Ansicht der Handhabe aus Fig. 3 aus Richtung der Fahrzeugtür;
- Fig. 5: Seitenansicht der Handhabe aus Fig. 3;
- Fig. 6: Draufsicht auf die Handhabe der Fig. 3 und
- Fig. 7: frontale Ansicht der Handhabe aus Fig. 3.

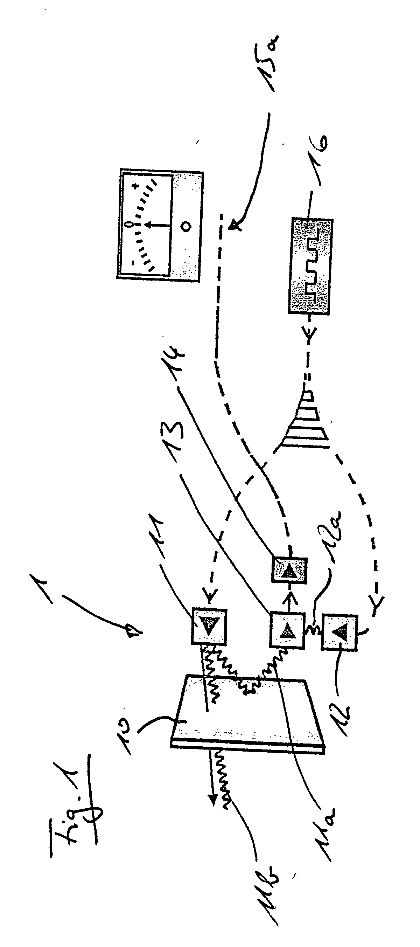

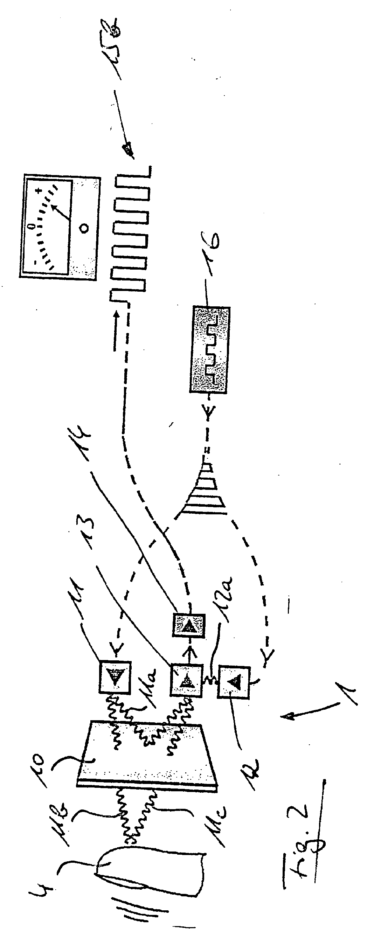

In den Figuren 1 und 2 wird schematisch das Verfahren zur Detektion eines Gegenstandes, hier einer Hand 4, anhand einer erfindungsgemäßen Sensorik 1 schematisch dargestellt. Die Sensorik 1 weist ein Betriebssignal 16 auf, welches sowohl eine Nutzlichtquelle 11 als auch eine Referenzlichtquelle 12 betreibt. Die Nutzlichtquelle 11 wird hierbei von dem Betriebssignal 16 immer gegenphasig zur Referenzlichtquelle 12 betrieben. Als Nutzlichtquelle 11 und Referenzlichtquelle 12 wird jeweils eine Infrarot-LED verwendet.

Die Referenzlichtquelle 12 strahlt ihre Infrarot-Strahlung als Referenzlichtsignal 12a direkt in ein Empfangselement 13 in Form einer Photodiode. Dagegen strahlt die Nutzlichtquelle 11 ihre Infrarot-Strahlung nicht direkt in das Empfangselement 13, sondern über eine Abdeckung 10 als Reflexionslichtsignal 11a. Ein Großteil der von der Nutzlichtquelle 11 ausgehenden Infrarot-Strahlung geht als Detektionsstrahlung 11b durch die Abdeckung 10 hindurch, die durchlässig für Infrarot-Strahlung ist.

Das Empfangselement 13 ist mit einer Auswerteeinheit 14 verbunden. In der Auswerteeinheit 14 wird die von dem Empfangselement 13 empfangene Infrarot-Strahlung so geregelt, dass unter allen Bedingungen ein statisches Betriebssignal als Auswertesignal 15a erhalten wird.

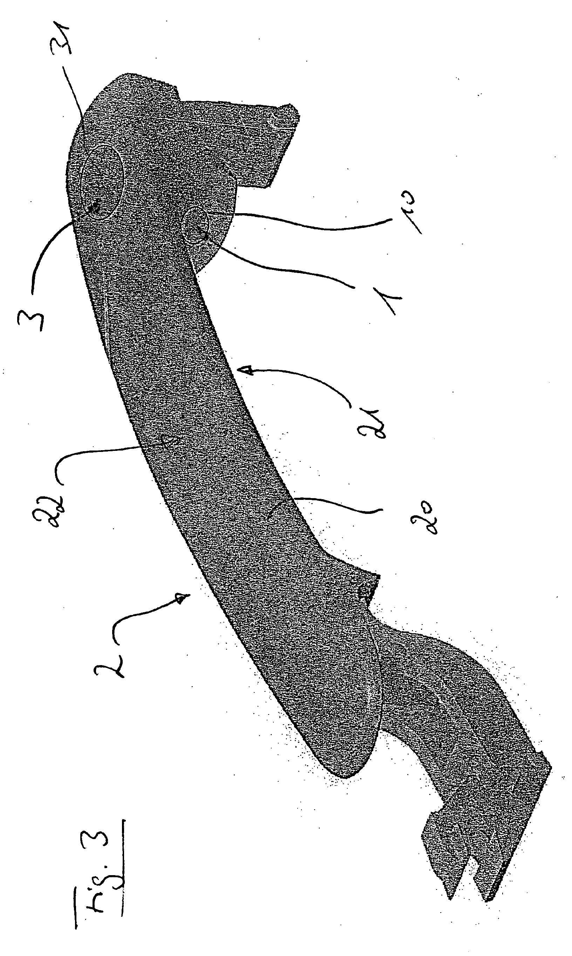

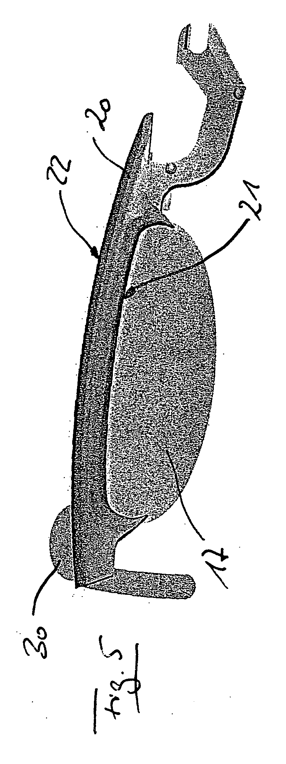

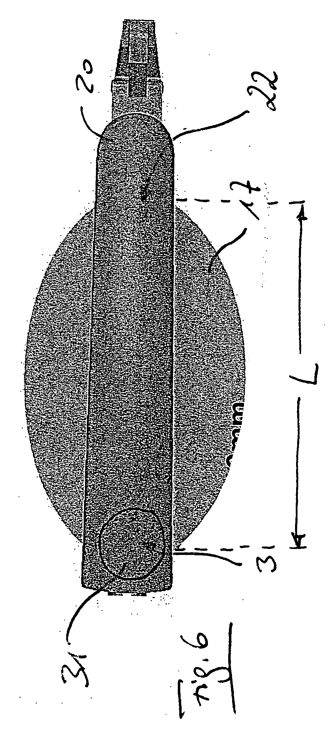

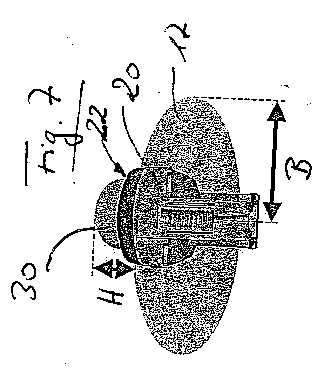

In Fig. 2 wird nun das Annähern einer Hand 4 an die Sensorik 1 dargestellt. Das Referenzlichtsignal 12a und das Reflexionslichtsignal 11a bleiben dabei unverändert. An der Hand 4 wird jedoch das Detektionssignal 11b reflektiert und ein Teil der reflektierten Strahlung 11c dringt durch die Abdeckung 10 in die Sensorik 1 ein und trifft dabei das Empfangselement 13. In der Auswerteeinheit 14 wird nun nicht mehr das Betriebssignal 15a der Fig. 1 detektiert, sondern ein Steuersignal 15b. Somit kann klar festgestellt werden, ob sich ein Gegenstand, insbesondere eine Hand 4, in den Detektionsbereich 17 (siehe Fig. 3 bis 7) der Sensorik 1 bewegt.

Zur Durchführung eines erfindungsgemäßen Entriegelungsverfahrens für eine Kraftfahrzeugtüre wird sobald ein Steuersignal 15b vorliegt eine Sende-/Empfangseinheit aktiviert, die bei einer niedrigen Frequenz, insbesondere bei ca. 125 kHz, über eine Ferritantenne (nicht gezeigt) ein Signal aussendet. Durch dieses Signal wird ein ID-Geber aktiviert, der vom Fahrer mit sich geführt wird - beispielsweise eine Sende- und Empfangseinheit in einem elektronischen Schlüssel. Dieser ID-Geber (nicht gezeigt) sendet dann ein Authentifikationssignal an das Kraftfahrzeug. Wenn der ID-Geber zu dem Kraftfahrzeug gehört, die Authentifikationskommunikation somit erfolgreich abgeschlossen wurde, wird die Kraftfahrzeugtür entriegelt. Die Authentifikationskommunikation findet in einem hochfrequenten Bereich, insbeosndere bei 433 MHz statt, da hierbei eine hohe Sicherheit gewährleistet ist und außerdem ein schneller Datenaustausch erfolgen kann. Ein schneller Datenaustausch führt dazu, dass die Zeit von der Erfassung der Hand 4, die sich der Sensorik 1 nähert, bis zur Entriegelung der Kraftfahrzeugtür sehr kurz ausfällt.

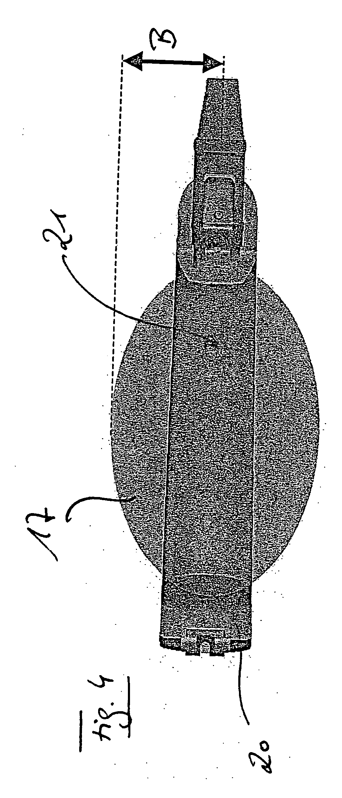

In den Figuren 3 bis 7 ist eine Handhabe 20 eines Türgriffes 2 eines Kraftfahrzeugs gezeigt, in die eine erfindungsgemäße Sensorik 1 sowie eine Zusatz-Sensorik 3 eingebaut sind. In den Figuren 4 bis 7 wird insbesondere der Detektionsbereich 17 der Sensorik 1 sowie der Detektionsbereich 30 der Zusatz-Sensorik 3 in seiner räumlichen Ausdehnung dargestellt.

In Fig. 3 ist gut zu erkennen, dass die Sensorik 1 an der Innenfläche 21 der Handhabe 20 angeordnet ist. Sie ist auf die (nicht gezeigte) Kraftfahrzeugtür innerhalb der Griffmulde ausgerichtet. Die Sensorik 1 ist unterhalb der Abdeckung 10 geschützt angeordnet. Somit befindet sie sich in einem abgeschlossenen Raum, der zerstörungsunanfällig ist und auch sehr gut gegen Vandalismus geschützt ist.

Dagegen ist an der Außenfläche 22 der Handhabe 20 eine Zusatz-Sensorik 3 angeordnet. Auch diese ist unter einer Abdeckung 31 angeordnet und lässt sich somit sehr schön designerisch in die Handhabe 20 integrieren. Sie kann dabei hinsichtlich der Farbe auf den Rest der Handhabe 20 abgestellt werden. Beispielsweise kann die Abdeckung 31 schwarz ausgeführt sein, wenn der Rest der Handhabe 20 auch in Schwarz gehalten ist. Die Zusatz-Sensorik 3 ist somit nahezu nicht zu erkennen. Die einzige Bedingung, die an die Abdeckung der Zusatz-Sensorik 3 - genau wie an die Abdeckung 10 der Sensorik 1 - zu stellen ist, ist, dass sie für die verwendete Infrarot-Strahlung durchlässig ist. Der Sensor der Zusatz-Sensorik 3 ist gleich aufgebaut wie der oben in den Figuren 1 und 2 beschriebene Sensor der Sensorik 1. Diese Zusatz-Sensorik 3 dient jedoch anders als die Sensorik 1 nicht zum Entriegeln der Fahrzeugtür, sonder zum Verriegeln der Fahrzeugtür. Je nach verwendeter Soft- und Hardware in Verbindung mit einer Auswerteeinheit kann eine Verriegelung bei einem Antippen der Abdeckung 31 erfolgen, bei einem Verweilen nach einer gewissen Zeit oder auch nur bei einem Wischen über die Abdeckung 31.

Der Detektionsbereich 17 der Sensorik 1 erstreckt sich über den gesamten Bereich der Griffmulde zwischen der Handhabe 20 des Türgriffes 2 und dem Türblech. Regelmäßig ist dies in Längsrichtung der Handhabe 20 eine Länge L von 10 bis 17 cm. Dies hängt jedoch stark von der Ausgestaltung der Handhabe 20 ab. Der Detektionsbereich 17 der Sensorik 1 erstreckt sich jedoch noch Einiges über die Griffmulde in seitlicher Richtung hinaus, d.h. regelmäßig nach oben und unten. Der Detektionsbereich 17 weist dabei in seiner Draufsicht (s. Fig. 4) eine Näherungsweise elliptischer Form auf. In seiner Breite B reicht der Detektionsbereich 17 ca. 5 cm sowohl nach oben als auch nach unten. Dies hat den enormen Vorteil, dass die Hand 4 eines Fahrers schon in einem Abstand von 5 cm zum Türgriff 2 detektiert wird. Im Anschluss daran bleibt für die Elektronik und die Sende- und Empfangseinheit genügend Zeit, um den ID-Geber beim Fahrer zu aktivieren und die Authentifikationskommunikation durchzuführen sowie bei positivem Ergebnis auch noch die Tür zu entriegeln bevor der Fahrer tatsächlich in einer flüssigen Bewegung die Handhabe 20 ziehen kann. Somit sind keinerlei Wartezeiten zwischen dem Greifen der Handhabe 20 durch den Fahrer und einer Entriegelung der Fahrzeugtür mehr nötig, wie dies bislang im Stand der Technik bei kapazitiven Sensoren der Fall war.

Dagegen ist der Detektionsbereich 30 der Zusatz-Sensorik 3 kleiner ausgebildet. Er weist im Durchmesser ca. 1 cm auf und in der Höhe H 0,5 cm. Der Detektionsbereich 30 der Zusatz-Sensorik 3 muss nicht so groß gewählt werden, da anders als beim Öffnen der Tür keine Wartezeit für den Fahrer entsteht, sondern er muss lediglich - je nach Software-Vorgabe - die Zusatz-Sensorik 3 berühren, darüber wischen oder eine vorgegebene Zeit seinen Finger darauf verweilen lassen.

Es versteht sich von selbst, dass die vorgenannten Maße lediglich exemplarisch sind und sowohl für die Sensorik 1 als auch die Zusatz-Sonsoriken 3 anderer Längen, Höhen, Breiten und Durchmesser gewählt werden können.

Es bleibt festzuhalten, dass die genaue Geometrie sowohl der Sensorik 1 als auch der Zusatz-Sensorik 3 im Rahmen der oben beschriebenen Vorgaben frei gewählt werden kann. Da die Handhabe 20 aus dem Stand der Technik wohl bekannt ist und auch nicht wesentlich für die Erfindung ist, wurde auf eine genauere und explizite Beschreibung der einzelnen Teile der Handhabe 20 verzichtet. Vielmehr wurden oben nur die in Zusammenhang mit der Erfindung interessanten Aspekte der Handhabe 20 ausgeführt.

Darüber hinaus bleibt noch festzuhalten, dass selbstreinigende oder schmutzabweisende Werkstoffoberflächen der Abdeckung 10 das Messverfahren verbessern.

Zusammenfassend kann gesagt werden, dass durch die erfindungsgemäße Sensorik und das dazugehörige Verfahren eine sehr komfortabel Möglichkeit gefunden wurde, eine Kraftfahrzeugtür berührungslos zu entriegeln, ohne dass der Fahrer des Kraftfahrzeugs seine Bewegung und sein Ziehen an der Handhabe des Türgriffes 2 unnatürlich unterbrechen oder verlangsamen muss. Vielmehr ist es möglich, mit der erfindungsgemäßen Vorrichtung und dem erfindungsgemäßen Verfahren eine Öffnung einer Kraftfahrzeugtür durch den Fahrer in einem Zug zu erlangen, ohne dass dieser einen Schlüssel aktiv in der Hand halten muss und eventuelle einen Knopf betätigen müsste. Durch die Erfindung wird das gesamte Verfahren voll automatisch durchgeführt.

### BEZUGSZEICHENLISTE

- 1: Sensorik
- 2: Türgriff
- 3: Zusatz-Sensorik
- 4: Hand
- 10: Abdeckung
- 11: Nutzlichtquelle
- 11 a: Reflexionslichtsignal
- 11b: Detektionssignal
- 11 c: Reflektierte Strahlung
- 12: Referenzlichtquelle
- 12a: Referenzlichtsignal
- 13: Empfangselement
- 14: Auswerteeinheit
- 15a: Auswertesignal
- 15b: Steuersignal
- 16: Betriebssignal
- 17: Detektionsbereich
- 20: Handhabe
- 21: Innenfläche
- 22: Außenfläche
- 30: Detektionsbereich
- 31: Abdeckung
- B: Breite
- H: Höhe
- L: Länge

## Patentansprüche

1. Berührungslose Sensorik (1) zum Öffnen eines Kraftfahrzeugs mit einem Sensor in einem Türgriff (2), welcher Sendeelemente (11, 12) und ein Empfangselement (13) aufweist, wobei die Sensorik an der Innenfläche (21) einer Handhabe (20) des Türgriffs (2) angeordnet ist,
**dadurch gekennzeichnet, dass**
es sich um einen optischen Sensor handelt,
die Sendeelemente (11, 12) eine Nutzlichtquelle (11) und eine Referenzlichtquelle (12) aufweisen,
das Empfangselement (13) ein lichtempfindlicher Detektor ist,
das Empfangselement (13) so zur Referenzlichtquelle (12) angeordnet ist, dass es von dem Referenzlichtsignal (12a) der Referenzlichtquelle (12) direkt getroffen wird, und das Empfangselement (13) so zur Nutzlichtquelle (11) angeordnet ist, dass es von dem Reflexionslichtsignal (11a) der Nutzlichtquelle (11) nur indirekt getroffen wird.

2. Sensorik (1) nach Anspruch 1,
**dadurch gekennzeichnet, dass**
die Nutzlichtquelle (11) und die Referenzlichtquelle (12) jeweils eine LED, insbesondere eine Infrarot-LED, ist und das Empfangselement (13) eine Photodiode ist.

3. Sensorik (1) nach einem der vorstehenden Ansprüche,
**dadurch gekennzeichnet, dass**
an der Außenfläche (22) der Handhabe (20) des Türgriffs (2) eine Zusatz-Sensorik (3) nach einem der vorstehenden Ansprüche angeordnet ist, die unabhängig von der Sensorik (1) ist.

4. Sensorik (1) nach einem der vorstehenden Ansprüche,
**dadurch gekennzeichnet, dass**
die Sensorik (1) und/oder die Zusatz-Sensorik (3) unter einem IR-durchlässigen Medium (10) angeordnet sind.

5. Sensorik (1) nach einem der vorstehenden Ansprüche,
**dadurch gekennzeichnet, dass**
im Türgriff (2) eine Sende-/Empfängereinheit angeordnet ist.

6. Ent- und Verriegelungssystem für ein Kraftfahrzeug mit einer Sensorik (1) nach einem der vorstehenden Ansprüche, wobei die Sensorik (1) mit einer Auswerteeinheit (14) verbunden ist, die eine Annäherung einer Hand (4) an die Sensorik (1) erfasst und die Auswerteeinheit (14) mit der Sender-/Empfängereinheit verbunden ist.

7. Ent- und Verriegelungssystem nach Anspruch 6,
**dadurch gekennzeichnet, dass**
sowohl die Sensorik (1) als auch die Sender-/Empfängereinheit im Türgriff (2) angeordnet sind.

8. Verfahren zum Entriegeln einer Kraftfahrzeugtür, wobei die Annäherung einer Hand (4) an einen Türgriff (2) durch eine Sensorik (1) gemäß einem der Ansprüche 1 bis 6 detektiert wird, ein Aktivierungssignal vom Kraftfahrzeug an einen ID-Geber beim Fahrer gesandt wird, der ID-Geber ein Authentifikationssignal an die Sender-/Empfängereinheit sendet und bei positiver Identifizierung die Kraftfahrzeugtür entriegelt wird.

9. Verfahren zum Entriegeln einer Kraftfahrzeugtür nach Anspruch 8,
**dadurch gekennzeichnet, dass**
das Aktivierungssignal niederfrequent ist, insbesondere bei ca. 125 kHz liegt, und über eine Ferritantenne als Sender-/Empfangseinheit ausgesendet wird.

10. Verfahren zum Entriegeln einer Kraftfahrzeugtür nach Anspruch 8 oder 9,
**dadurch gekennzeichnet, dass**
die Authentifikationskommunikation zwischen ID-Geber und Sender-/Empfängereinheit im hochfrequenten Bereich erfolgt, insbesondere bei ca. 433 MHz.
